# EUROPEAN PATENT APPLICATION

(11) **EP 4 343 938 A1**
(43) Date of publication of application: **27.03.2024**
(21) Application number: 23161158.3
(22) Date of filing: 10.03.2023
(51) Int. Cl.: H01M 50/242, H01M 50/244, H01M 50/249

(54) **BATTERY BOX AND BATTERY PACK**

(30) Priority: 20.09.2022 CN 202211145498
(71) Applicant: CALB Group Co., Ltd., Changzhou City, Jiangsu Province (CN)
(72) Inventor: JIN, Zhaoyang, Changzhou City, Jiangsu Province (CN); WANG, Shuaifeng, Changzhou City, Jiangsu Province (CN); YANG, Xulong, Changzhou City, Jiangsu Province (CN); CHEN, Hua, Changzhou City, Jiangsu Province (CN); JIANG, Xinwei, Changzhou City, Jiangsu Province (CN)
(74) Representative: Becker, Eberhard

(57) **Abstract**

A battery box (100) and a battery pack are provided. The battery box (100) includes a bottom plate (12) and a side wall. The side wall and the bottom plate (12) enclose a space for accommodating a battery and/or an electrical component. The battery box (100) further includes a lifting column (111) integrally formed with the side wall and a fixed sealing block (114) sleeved on the lifting column (111). The bottom plate (12) is located between the side wall and the fixed sealing block (114). The side wall is fixedly connected to the bottom plate (12) through the fixed sealing block (114). A first sealing member (1144) for sealing a gap between the fixed sealing block (114) and the bottom plate (12) is arranged between the fixed sealing block (114) and the bottom plate (12). The fixed sealing block (114) is sealingly connected to the lifting column (111).

## Description

### BACKGROUND

### Technical Field

The disclosure relates to the technical field of batteries, and in particular, relates to a battery box and a battery pack.

### Description of Related Art

Battery packs are an important part of electric vehicles, and the sealing performance of the battery packs is crucial to the safety of the batteries. At present, when batteries are assembled, in order to allow a battery pack to be well connected and fixed to the entire vehicle, the battery pack is usually hoisted on the floor of the vehicle by using a lifting column assembly that penetrates through the battery pack. However, the currently available lifting assemblies cannot meet the requirements for sealing performance of the battery packs.

### SUMMARY

In the first aspect, the disclosure provides a battery box, and the battery box includes a bottom plate and a side wall. Herein, the side wall and the bottom plate enclose a space for accommodating a battery and/or an electrical component.

The battery box further includes a lifting column integrally formed with the side wall and a fixed sealing block sleeved on the lifting column.

The bottom plate is located between the side wall and the fixed sealing block.

The side wall is fixedly connected to the bottom plate through the fixed sealing block.

A first sealing member for sealing a gap between the fixed sealing block and the bottom plate is arranged between the fixed sealing block and the bottom plate.

The fixed sealing block is sealingly connected to the lifting column.

In the second aspect, the disclosure further provides a battery pack, and the battery pack includes the battery box described above and a battery fixed in the battery box.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic structural view of a battery box according to an embodiment of the disclosure.
FIG. 2 is a schematic exploded view of the battery box according to an embodiment of the disclosure.
FIG. 3 is a schematic structural view of a gasket body according to an embodiment of the disclosure.
FIG. 4 is a schematic enlarged view of the region A in FIG. 3.
FIG. 5 is a schematic structural view of a fixed sealing block according to an embodiment of the disclosure.
FIG. 6 is a cross-sectional view of the fixed sealing block according to an embodiment of the disclosure.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

In addition, the technical features involved in the different embodiments of the disclosure described below can be combined with each other as long as the technical features do not conflict with each other.

In order to facilitate the understanding of a battery box provided in the embodiments of the disclosure, its application scenario is described first. The battery box provided in the embodiments of the disclosure is applied in a battery pack to carry batteries, and in addition, the battery box is also used as a force-bearing structure for the battery pack when it is assembled and hoisted on a vehicle or other equipment. At present, a battery box is poorly sealed structurally. Therefore, the embodiments of the disclosure provide a battery box, which will be described in detail below with reference to specific drawings and embodiments.

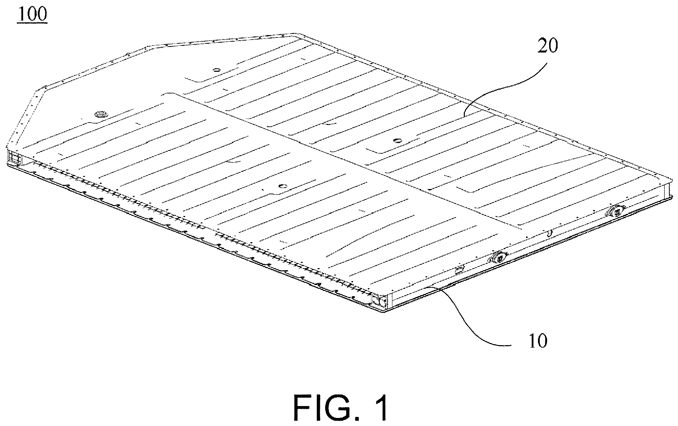

With reference to FIG. 1, FIG. 1 is a schematic structural view of a battery box 100 according to an embodiment of the disclosure. The main structure of the battery box 100 provided in the embodiments of the disclosure includes a box body 10 and a box cover 20 covering the box body 10. When being matched, the box cover 20 is fastened on the box body 10 and forms a space for accommodating a battery. It should be understood that a specific structural form of the battery box 100 is illustrated in FIG. 1, but the specific structural forms of the box cover 20 and the box body 10 of the battery box 100 are not specifically limited in the embodiments of the disclosure, and the shapes of the box cover 20 and the box body 10 of the battery box 100 can be adjusted according to needs.

It should be understood that the box cover 20 is an optional structure, which can be set in the embodiments of the disclosure according to needs. When the battery box 100 includes the box cover 20, the box body 10 is correspondingly provided with a matching structure, and when the battery box 100 does not include the box cover 20, the box body 10 can correspondingly cancel the matching structure with the box cover 20.

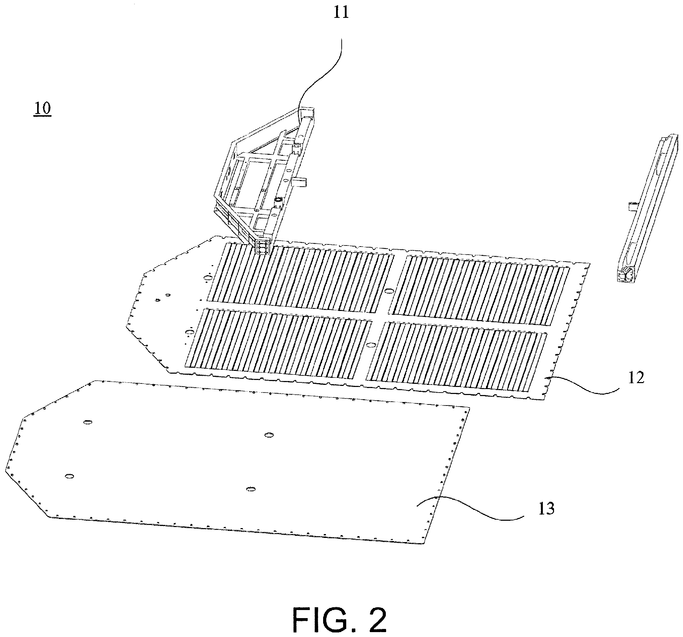

With reference to FIG. 2 together, FIG. 2 is a schematic exploded view of the box body of the battery box. The box body 10 of the battery box 100 mainly includes a side wall and a bottom plate 12 connected to the side wall. The side wall is arranged on the bottom plate 12 and is fixedly connected to the bottom plate 12 to form a box structure for accommodating a battery and/or an electrical component. Only two opposite side beams 11 are shown in FIG. 1, but it should be understood that in the embodiments of the disclosure, side beams 11 may be provided on the four sides of the bottom plate 12 to form the space for accommodating a battery and/or an electrical component.

In the embodiments of the disclosure, the bottom plate 12 may be a metal plate with only a supporting function or may be a liquid cooling plate capable of dissipating heat generated by the battery. When being used as a liquid cooling plate, a liquid cooling pipe is embedded in the liquid cooling plate, and heat generated by the battery can be dissipated through the liquid cooling pipe.

As an optional solution, the battery box 100 provided in the embodiments of the disclosure may further include a bottom guard plate 13. The bottom guard plate 13 is configured to improve the safety of the battery box 100 and to reduce the risk faced by the battery box 100 when a collision occurs. Exemplarily, the bottom guard plate 13 is stacked with the bottom plate 12, and the bottom guard plate 13 is located on a surface of the bottom plate 12 away from the edge beam 11. The bottom guard plate 13 may be made of materials with specific structural strength. Exemplarily, the bottom guard plate 13 may be a bottom guard plate 13 made of a metal material. For instance, the bottom guard plate 13 is a bottom guard plate 13 made of different materials such as steel, iron, aluminum, etc.

When the battery box 100 is assembled on a vehicle, the battery box 100 is hoisted on a chassis of the vehicle. The bottom guard plate 13 is located at the outermost side of the battery box 100. When the chassis of the vehicle is scratched or a foreign object bounces up and hits the battery box 100 during driving, the battery box 100 may be protected by the outermost bottom guard plate 13 to reduce the risk of damage to the battery box 100.

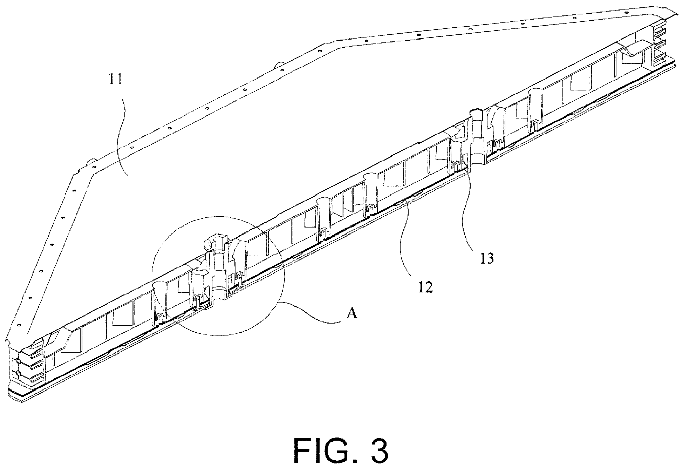

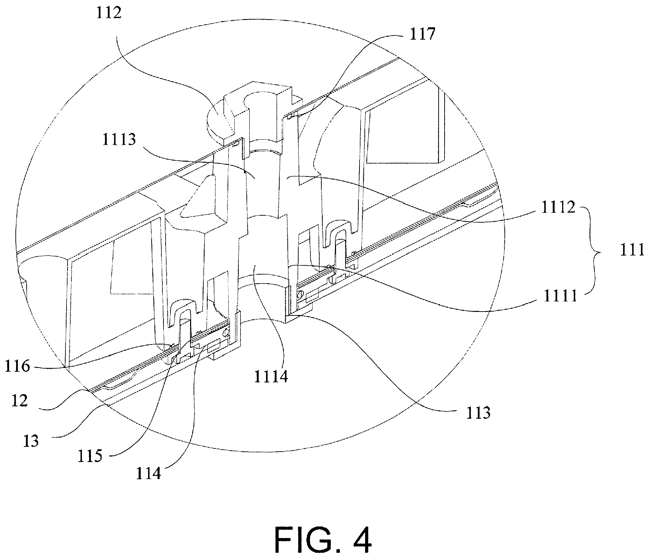

With reference to FIG. 3 and FIG. 4 together, FIG. 3 shows a schematic view of the structure when the bottom plate is connected to the side wall, and FIG. 4 shows an enlarged schematic view of the region A in FIG. 3. The side wall provided in the embodiments of the disclosure is provided with a lifting column 111, and the lifting column 111 is integrally formed with the side wall and is embedded in the side wall. When the lifting column 111 is arranged, the side wall where the lifting column 111 can be arranged can be the side beam 11 of the box body 10 or can be a different structure such as a middle beam of the box body 10. For convenience of description, the structure of the battery box 100 provided in the embodiments of the disclosure is described by taking the hoisting structure on the side beam 11 as an example.

The lifting column 111 is used as a structure connected to the bottom plate 12 on the one hand, and is used as a structure connected to the box cover 20 on the other hand.

When the lifting column 111 is specifically arranged, a length direction of the lifting column 111 is in a height direction of the side beam 11. During manufacturing, the lifting column 111 may be integrally formed with the side beam 11 when the side beam 11 is cast. By integrally forming the lifting column 111 and the side beam 11, the forming process may be easily performed, the lifting column 111 is not required to be installed separately, and the entire battery box 100 may be conveniently assembled.

It should be understood that different numbers of the lifting columns 111 provided in the embodiments of the disclosure can be set according to needs. Exemplarily, the number of lifting columns 111 may be two, three, four, and so on. During specific arrangement, the number of lifting columns 111 may be set according to needs. However, no matter how many lifting columns 111 are arranged, all the lifting columns 111 have the same structure, so one of the lifting columns 111 is used as an example for illustration.

The lifting column 111 is configured for passing through a bolt configured for hoisting the battery box 100 to the chassis of the vehicle. The overall structure of the lifting column 111 is a cylindrical structure with openings at both ends. During assembly, a fastener is inserted into the lifting column 111 from an opening in the lifting column 111 facing away from the chassis. The end of the fastener is exposed from another opening and is threadedly connected to the chassis, so as to fix the battery box 100 on the chassis of the vehicle.

When the lifting column 111 is arranged, a height of the lifting column 111 is greater than a height of the side beam 11, and a top portion of the lifting column 111 is flush with or slightly lower than a top surface of the side beam 11. A bottom portion of the lifting column 111 protrudes from a bottom surface of the side beam 11. Herein, the top surface of the side beam 11 refers to the surface where the side beam 11 is attached to the box cover 20, and the bottom surface of the side beam 11 is the surface where the side beam 11 is attached to the bottom plate 12. For convenience of description, one end of the lifting column 111 close to the top surface of the side beam 11 is named as a first end of the lifting column 111, and the opposite end is named as a second end of the lifting column 111.

When the bottom plate 12 is connected to the side beam 11, the bottom plate 12 is provided with a through hole capable of receiving the second end of the lifting column 111. During assembly, the second end of the lifting column 111 passes through the bottom plate 12 and is exposed on the side of the bottom plate 12 away from the side beam 11.

The battery box 100 provided in the embodiments of the disclosure further includes a fixed sealing block 114 for sealing a gap between the bottom plate 12 and the side beam 11. When the fixed sealing block 114 is arranged, the fixed sealing block 114 is sleeved on the lifting column 111, and the bottom plate 12 is pressed against the side beam 11 for fixing.

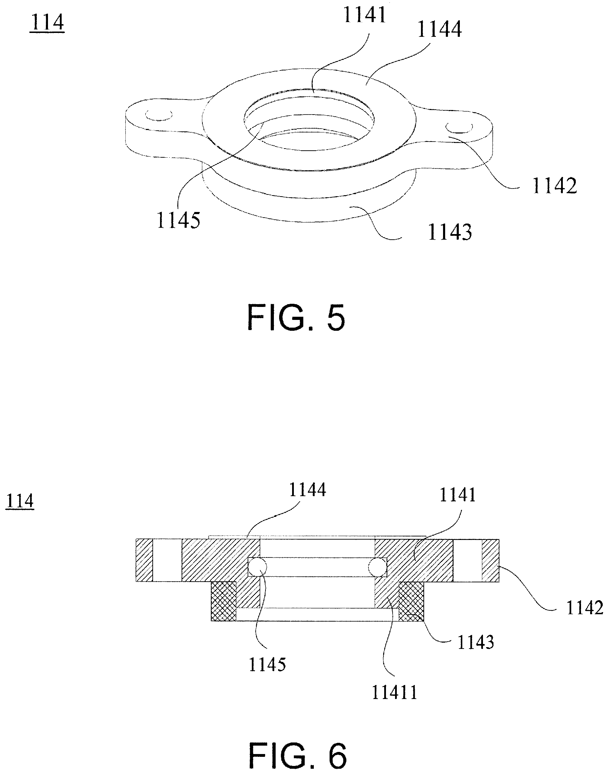

With reference to FIG. 5 and FIG. 6 together, FIG. 5 shows a schematic structural view of the fixed sealing block, and FIG. 6 shows a cross-sectional view of the fixed sealing block. When the fixed sealing block 114 is assembled, the fixed sealing block 114 is sleeved on the second end of the lifting column 111, and the fixed sealing block 114 is sealingly connected to the lifting column 111. During specific sealing, a second sealing member 1145 for sealing a gap between the fixed sealing block 114 and the lifting column 111 is provided between the fixed sealing block 114 and the lifting column 111. The second sealing member 1145 may be a sealing sleeve, for example, an O-ring. A groove is arranged on the fixed sealing block 114, and the second sealing member 1145 is arranged in the groove. Exemplarily, when the second sealing member 1145 is arranged, the fixed sealing block 114 is provided with a through hole (not shown) that can be sleeved on the lifting column 111. A groove (not shown) is formed on an inner wall of the through hole, and the second sealing member 1145 may be snapped into the groove. When the second sealing member 1145 is assembled, a portion of the second sealing member 1145 is exposed outside the groove, so as to ensure that when the second sealing member 1145 is assembled with the lifting column 111, the second sealing member 1145 has sufficient deformation to seal the gap between the fixed sealing block 114 and the structure of the lifting column 111.

With reference to FIG. 4 and FIG. 5 together, when the fixed sealing block 114 is sleeved on the bottom plate 12, the bottom plate 12 is pressed against the side beam 11, so that the bottom plate 12 is located between the side beam 11 and the fixed sealing block 114.

When the side beam 11 is connected to the bottom plate 12, the side beam 11 is fixedly connected to the bottom plate 12 through the fixed sealing block 114. To be specific, the battery box 100 further includes a first fastener 115, the first fastener 115 passes through the fixed sealing block 114 and the bottom plate 12 and is fixedly connected to the side beam 11. Exemplarily, a threaded hole is provided on the side beam 11, and the first fastener 115 passes through the fixed sealing block 114 and is threadedly connected to the threaded hole on the side beam 11. Therefore, through the first fastener 115, the fixed sealing block 114, the bottom plate 12, and the side beam 11 are locked and fixed.

As an optional solution, the fixed sealing block 114 includes a main body 1141 and lifting ears 1142 connected to the main body 1141. In the embodiments of the disclosure, there are two lifting ears 1142, and the two lifting ears 1142 are arranged on opposite sides of the main body 1141. The first fastener 115 passes through the lifting ears 1142 and the bottom plate 12 in sequence and is threadedly connected to the threaded hole on the side beam 11.

It should be understood that the number of lifting ears 1142 is not specifically limited in the embodiments of the disclosure, and the number of lifting ears 1142 may be any number such as three, four, or the like.

As an optional solution, the hole on the fixed sealing block 114 for allowing the first fastener 115 to pass through is a counterbore to accommodate a nut of the first fastener 115, so that a protruding size of the first fastener 115 is reduced.

When the fixed sealing block 114 is arranged, a first sealing member 1144 for sealing a gap between the fixed sealing block 114 and the bottom plate 12 is provided between the fixed sealing block 114 and the bottom plate 12. Exemplarily, the first sealing member 1144 may be an O-ring. The first sealing member 1144 is disposed on a surface of the fixed sealing block 114 facing the bottom plate 12. During assembly, the first sealing member 1144 may be fixed on the fixed sealing block 114 by bonding, and the first sealing member 1144 is sleeved on the second end of the lifting column 111. When the fixed sealing block 114 is fixedly connected to the side beam 11 through the first fastener 115, the first sealing member 1144 is pressed and elastically deformed and seals the gap between the fixed sealing block 114 and the bottom plate 12.

As an optional solution, the first sealing member 1144 is also configured to seal the gap between the lifting column 111 and the fixed sealing block 114. Exemplarily, when the first sealing member 1144 is pressed by the fixed sealing block 114, the first sealing member 1144 is elastically deformed in a circumferential direction, and a size of the through hole of the first sealing member 1144 may be reduced to seal the gap between the fixed sealing block 114 and the lifting column 111.

It can be seen from the above description that when the fixed sealing block 114 is arranged, the first sealing member 1144 and the second sealing member 1145 are used to seal the fixed sealing block 114, the lifting column 111, and the bottom plate 12, so that the sealing effect is improved on the one hand. On the other hand, since the fixed sealing block 114 is an independent component which may be easily assembled and disassembled, if the first sealing member 1144 or the second sealing member 1145 fails, it is only necessary to disassemble the fixed sealing block 114 and replace it with a new sealing member. The maintenance of the entire battery box 100 may thus be conveniently performed.

As an optional solution, in order to improve the sealing effect, a groove is provided on the side beam 11, and the groove is located on a surface of the side beam 11 facing the bottom plate 12. Further, an opening direction of the groove faces the bottom plate 12, and a fourth sealing member 116 is located in the groove and is partially exposed outside the groove. When the first fastener 115 is threadedly connected to the threaded hole, the fourth sealing member 116 is pressed to seal the gap between the side beam 11 and the bottom plate 12.

When the battery box 100 includes the bottom guard plate 13, the fixed sealing block 114 is located between the bottom plate 12 and the bottom guard plate 13. During assembly, the bottom guard plate 13 is fixedly connected to the lifting column 111 through a second fastener 113. Exemplarily, an inner wall of the second end of the lifting column 111 is provided with an internal thread. The battery box 100 also includes the second fastener 113, and the second fastener 113 is connected to the internal thread of the second end of the lifting column 111. Further, the bottom guard plate 13 is pressed against the fixed sealing block 114. It should be understood that the second fastener 113 has a through hole therethrough, so as to ensure that when the second fastener 113 is threadedly connected to the lifting column 111, the fastener used for hoisting the battery box 100 can pass through the second fastener 113 and be inserted into the lifting column 111.

As an optional solution, a third sealing member 1143 for sealing between the bottom guard plate 13 and the fixed sealing block 114 is disposed between the bottom guard plate 13 and the fixed sealing block 114. Exemplarily, a surface of the fixed sealing block 114 facing the bottom guard plate 13 is provided with a stepped structure 11411, and the third sealing member 1143 is sleeved on the stepped structure 11411. During assembly, the third sealing member 1143 is an O-ring gasket. The stepped structure 11411 is disposed on the main body 1141 of the fixed sealing block 114, and the stepped structure 11411 is located on a surface of the fixed sealing block 114 away from the bottom plate 12.

When the third sealing member 1143 is assembled, the third sealing member 1143 is sleeved on the stepped structure 11411, and a portion of the third sealing member 1143 protrudes outside the stepped structure 11411. That is, during assembly, the third sealing member 1143 wraps the stepped structure 11411 in the height direction. When the bottom guard plate 13 is connected to the side beam 11, the third sealing member 1143 is pressed and deformed, so that the gap between the fixed sealing block 114 and the bottom guard plate 13 is sealed. The arranged stepped structure 11411 can limit the amount of deformation of the third sealing member 1143, so that the third sealing member 1143 is prevented from failing due to excessive pressing.

As an optional solution, when the stepped structure 11411 is arranged, a stepped surface of the stepped structure 11411 is lower than a size of the nut of the first fastener 115 exposed to the fixed sealing block 114 in the height direction. This is to prevent the exposed nut from pressing against the bottom guard plate 13 and causing the third sealing member 1143 to be pressed and deformed in a small amount, which may affect the sealing effect.

As an optional solution, the fixed sealing block 114 provided in the embodiments of the disclosure may not be provided with a stepped structure, and the amount of pressing deformation of the third sealing member 1143 is limited by the portion of the first fastener 115 exposed outside the fixed sealing block 114.

The box cover 20 is structurally connected to the lifting column 111 through a third fastener 112 to fix the box cover 20 onto the box body 10. Exemplarily, the second end of the lifting column 111 is provided with an internal thread, and the third fastener 112 passes through the box cover 20 and is threadedly connected to the internal thread of the lifting column 111 to fix the box cover 20 onto the side wall. In addition, it should be understood that the structure of the third fastener 112 is similar to that of the second fastener 113 and also has a through hole that allows the fastener for hoisting the battery box to pass through, so as to ensure that the battery box 100 can be hoisted on the chassis of the vehicle.

The box cover 20 that covers the side wall is sealingly connected to the lifting column 111. Exemplarily, the first end of the lifting column 111 is provided with a fifth sealing member 117, and the end surface of the first end of the lifting column 111 is provided with a groove. The fifth sealing member 117 is fitted in the groove and can be partially exposed outside the lifting column 111. When the box cover 20 is fixed, the box cover 20 is pressed against the side beam 11. When the box cover 20 is fixedly connected to the lifting column 111 through the third fastener 112, the fifth sealing member 117 is pressed and deformed and thus seals the gap between the box cover 20 and the lifting column 111.

When the lifting column 111 is arranged, the lifting column 111 is a cylindrical structure. Exemplarily, the lifting column 111 has a stepped hole for allowing a bolt to pass through, and a stepped surface of the stepped hole is configured to press fit with a nut of the bolt. Herein, a stepped hole with a smaller diameter is away from the bottom plate, and a stepped hole with a greater diameter is close to the bottom plate.

In addition, in order to improve the structural strength of the connection between the fastener and the lifting column 111, when the lifting column 111 is arranged, the lifting column 111 adopts a stepped structure. Exemplarily, the lifting column 111 includes a first cylinder 1111 and a second cylinder 1112 fixedly connected, and a diameter of the first cylinder 1111 is greater than a diameter of the second cylinder 1112. Herein, the first cylinder 1111 is close to the bottom plate 12, and the second cylinder 1112 is close to the box cover 20. Exemplarily, when the bottom guard plate 13 is fixed, the second fastener 113 is threadedly connected to the first cylinder 1111, and when the box cover is fixed, the third fastener 112 is threadedly connected to the second cylinder 1112.

Besides, the stepped hole includes a first hole 1114 and a second hole 1113 communicating with each other. A diameter of the first hole 1114 is greater than a diameter of the second hole 1113. The first hole 1114 is located in the first cylinder 1111. A portion of the second hole 1113 is located in the first cylinder 1111, and the other portion of the second hole 1113 is located in the second cylinder 1112. Exemplarily, a length of the first hole 1114 is less than a length of the first cylinder 1111, and a length of the second hole 1113 is greater than a length of the second cylinder 1112. Therefore, when the fastener is assembled in the lifting column 111, it can be closer to the box cover 20, and the torque that the battery box 100 bears can be improved. Further, the structural strength of the lifting column 111 may be improved, and the stability of the battery box 100 may be enhanced.

Exemplarily, as an optional solution, a length of the stepped surface from the bottom plate is 1/3 to 2/3 of a length of the lifting column 111. The length of the stepped surface from the bottom plate is 1/3, 1/2, 2/3, etc. of the length of the lifting column 111 in different proportions. In this way, the lifting column may have favorable structural strength, and the torque that the battery box bears during hoisting is also reduced.

It should be understood that the above fasteners may be common fasteners such as bolts and screws. In the embodiments of the disclosure, bolts or screws may be selected according to the force applied on each structure in the battery box.

The embodiments of the disclosure further provide a battery pack, and the battery pack includes the battery box 100 described above and a battery fixed in the battery box 100. In the above technical solutions, the first sealing member 1144 and the second sealing member 1145 are used to seal the fixed sealing block 114, the lifting column 111, and the bottom plate 12, so that the sealing effect is improved on the one hand. On the other hand, since the fixed sealing block 114 is an independent component which may be easily assembled and disassembled, if the first sealing member 1144 or the second sealing member 1145 fails, it is only necessary to disassemble the fixed sealing block 114 and replace it with a new sealing member. The maintenance of the entire battery box 100 may thus be conveniently performed.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. A battery box (100), comprising a bottom plate (12) and a side wall, wherein the side wall and the bottom plate (12) enclose a space for accommodating a battery and/or an electrical component,
the battery box (100) further comprises a lifting column (111) integrally formed with the side wall and a fixed sealing block (114) sleeved on the lifting column (111), wherein
the bottom plate (12) is located between the side wall and the fixed sealing block (114),
the side wall is fixedly connected to the bottom plate (12) through the fixed sealing block (114),
a first sealing member (1144) for sealing a gap between the fixed sealing block (114) and the bottom plate (12) is arranged between the fixed sealing block (114) and the bottom plate (12), and
the fixed sealing block (114) is sealingly connected to the lifting column (111).

2. The battery box (100) according to claim 1, wherein a second sealing member (1145) for sealing a gap between the fixed sealing block (114) and the lifting column (111) is arranged between the fixed sealing block (114) and the lifting column (111).

3. The battery box (100) according to claim 2, wherein a groove is arranged on the fixed sealing block (114), and the second sealing member (1145) is arranged in the groove.

4. The battery box (100) according to claim 2, further comprising a first fastener (115), wherein the first fastener (115) passes through the fixed sealing block (114) and the bottom plate (12) and is fixedly connected to the side wall.

5. The battery box (100) according to claim 1, further comprising a bottom guard plate (13), wherein the bottom guard plate (13) is stacked with the bottom plate (12), and the bottom guard plate (13) is located on a side of the bottom plate (12) away from the side wall,
a third sealing member (1143) for sealing a gap between the bottom guard plate (13) and the fixed sealing block (114) is arranged between the bottom guard plate (13) and the fixed sealing block (114).

6. The battery box (100) according to claim 5, wherein a surface of the fixed sealing block (114) facing the bottom guard plate (13) is provided with a stepped structure (11411), and the third sealing member (1143) is sleeved on the stepped structure (11411).

7. The battery box (100) according to any one of claims 1-6, wherein the lifting column (111) has a stepped hole for allowing a bolt to pass through, and a stepped surface of the stepped hole is configured to press fit with a nut of the bolt.

8. The battery box (100) according to claim 7, wherein the lifting column (111) comprises a first cylinder (1111) and a second cylinder (1112) fixedly connected, and a diameter of the first cylinder (1111) is greater than a diameter of the second cylinder (1112),
the stepped hole comprises a first hole (1114) and a second hole (1113) communicating with each other, and a diameter of the first hole (1114) is greater than a diameter of the second hole (1113), wherein
the first cylinder (1111) is close to the bottom plate (12),
the first hole (1114) is located in the first cylinder (1111), and
a portion of the second hole (1113) is located in the first cylinder (1111), and the other portion of the second hole (1113) is located in the second cylinder (1112).

9. The battery box (100) according to claim 7, wherein a length of the stepped surface from the bottom plate (12) is 1/3 to 2/3 of a length of the lifting column (111).

10. The battery box (100) according to claim 8, wherein when the battery box (100) comprises a bottom guard plate (13),
the battery box (100) further comprises a second fastener (113), the second fastener (113) is threadedly connected to the first cylinder (1111) and is configured to fixedly connect the bottom guard plate (13) with the lifting column (111).

11. A battery pack, comprising the battery box (100) according to any one of claims 1-10 and a battery fixed in the battery box (100).
